Europäisches Patentamt

European Patent Office

Office européen des brevets

(19)

(11) Veröffentlichungsnummer : **0 124 471**
**B1**

(12) **EUROPÄISCHE PATENTSCHRIFT**

(45) Veröffentlichungstag der Patentschrift :
30.12.86

(21) Anmeldenummer : 84730002.7

(22) Anmeldetag : 09.01.84

(51) Int. Cl.⁴ : **G 01 M 3/02**, G 01 M 3/28,
G 01 N 3/12

(54) Werkzeug zur Prüfung von Rohren in einer Rohrprüfpresse.

(30) Priorität : 02.03.83 DE 3307813

(43) Veröffentlichungstag der Anmeldung : ·
07.11.84 Patentblatt 84/45

(45) Bekanntmachung des Hinweises auf die Patenterteilung : 30.12.86 Patentblatt 86/52

(84) Benannte Vertragsstaaten :
AT DE FR GB IT

(56) Entgegenhaltungen :
DE-A- 2 811 930
DE-B- 2 640 221
US-A- 4 281 535

(73) Patentinhaber : MANNESMANN Aktiengesellschaft
Mannesmannufer 2
D-4000 Düsseldorf 1 (DE)

(72) Erfinder : Jansen, Herbert
Am Kirchkamp 34
D-4052 Glehn (DE)
Erfinder : Schiffers, Hans-Günther
Am Dreimüllerhof 17
D-4050 Mönchengladbach 1 (DE)
Erfinder : Gerretz, Richard
Johannisstrasse 39
D-4060 Viersen 12 (DE)

(74) Vertreter : Meissner, Peter E., Dipl.-Ing. et al
Herbertstrasse 22
D-1000 Berlin 33 (DE)

## Beschreibung

Die Erfindung betrifft ein Werkzeug zum Prüfen von Rohren in einer Rohrprüfpresse mittels Flüssigkeitsdruck, bestehend aus einem Gehäuse, in das von einer Seite das Ende des zu prüfenden Rohres eingeführt wird und das von der anderen Seite mit in das Innere des Rohres geleitetem Druckmittel beaufschlagt wird.

Ein bekanntes Werkzeug für eine Flüssigkeitsdruckprüfeinrichtung für Rohre (DE-AS-26 40 221) besteht aus einem Gehäuse und einem ringförmigen Dichtungskörper aus gummielastischem Werkstoff, der gegen den Umfang des eingeführten Rohres radial anpreßbar ist und mit seinen Stirnflächen an den Stirnflächen einer Ausnehmung des Gehäuses dicht anliegt. Auf der Innenfläche des Dichtungskörpers sind über den Umfang verteilte Druckstücke aus hartem Werkstoff angeordnet, die sich in axialer Richtung nur über einen Teil der axialen Länge des Dichtungskörpers erstrecken und die sich beim radialen Zusammenpressen des Dichtungskörpers mit diesem radial bewegen können. Die Druckstücke überlappen einander in axialer Richtung gesehen.

Das Problem bei diesen Werkzeuge besteht darin, daß der Prüfdruck für das Rohr den Dichtungskörper auch axial beansprucht, wobei der gummielastische Werkstoff unter dem Einfluß des hohen Prüfdruckes zu kriechen beginnt, so daß unter Druck stehendes Prüfwasser entweichen kann. Die bekannte Dichtung will die axiale Belastung durch die bekannten Druckstücke aufnehmen, die in Axialrichtung einander überlappen und somit ein axiales Abstützen des Dichtringes gewährleisten.

Die in den elastischen Dichtungskörper eingearbeiteten Druckstücke müssen beim radialen Zusammenpressen des Dichtungskörpers sich mit diesem radial bewegen können, was eine starke Belastung zwischen elastischem Dichtungskörper und starren Druckstücken bedeutet. Die Dichtungskörper der vorgeschlagenen Art sind deshalb sehr sorgfältig und aufwendig zu erstellen, damit möglichst hohe Standzeiten des Dichtungskörpers gewährleistet sind. Da trotz alledem die Dichtungskörper infolge ihrer wechselnden Belastung Verschleiß unterliegen, müssen diese von Zeit zu Zeit ausgetauscht, also durch einen neuen Dichtungskörper ersetzt werden. Dies ist im Hinblick auf die aufwendige Ausbildung des Dichtungskörpers sehr kostenintensiv.

Der vorliegenden Erfindung liegt deshalb die Aufgabe zugrunde, ein Werkzeug zum Prüfen von Rohren zu schaffen, das mit geringerem Aufwand die durch das bekannte Rohrwerkzeug gelöste Aufgabe zu lösen in der Lage ist und bei dem einfach herstellbare Verschleißteile schnell (und kostengünstig) ausgewechselt werden können.

Zur Lösung der Aufgabe werden die im Patentanspruch 1 beschriebenen Maßnahmen vorgeschlagen.

Der Grundgedanke der vorliegenden Erfindung besteht darin, die bekannte axiale Abstützung des Dichtringes vom eigentlichen Dichtring zu trennen, um die aufwendig bearbeiteten, jedoch geringem Verschleiß unterliegenden Stützelemente an ihrem Platz belassen zu können, wenn die verschlissenen elastischen Dichtungsteile ausgewechselt werden müssen. Das vorgeschlagene Werkzeug besteht somit im wesentlichen aus drei Teilen, dem radialen Stützring mit bekannten Stützsegmenten, einem Axialkräfte aufnehmenden flachen Stützring und der eigentlichen elastischen Dichtung.

In einer vorteilhaften Variante des erfindungsgemäßen Werkzeugs ist vorgesehen, zur Verformung des elastischen Dichtringes einen stirnseitig axial auf den Dichtring wirkenden Ringkolben vorzusehen, der vorzugsweise unmittelbar vom Prüfdruck beaufschlagbar ist. Ein solcher Ringkolben verformt die elastische Dichtung und legt diese dabei an das zu prüfende Rohrstück radial an. Der Dichtring ist als Verschleißteil einfach auswechselbar gestaltet und in seiner Herstellung wesentlich preiswerter als der aus dem Stand der Technik bekannte Dichtungskörper mit eingelassenen Stützelementen.

Nach einer anderen Ausführungsform der Erfindung ist vorgesehen, daß der elastische Dichtungring als in einer Ringnut des Gehäuses dichtend geführte Manschette ausgebildet ist, die durch in die Nut geleitetes Druckmittel radial verformbar ist. Mit einem derart ausgebildeten Dichtring lassen sich die erfindungsgemäßen Vorteile ebenfalls erreichen, nämlich die Trennung des Dichtungskörpers von den Stützelementen.

Nach einem vorteilhaften Merkmal einer weiteren Ausführungsart der Erfindung wird vorgeschlagen, daß der Stützring als radialer Vorsprung an die Innenseite des Gehäuses angeformt ist. Dieser Stützring, der die Funktion der axialen Abstützung der elastischen Dichtung übernimmt, ist in seinem Innendurchmesser unveränderbar, d. h. nicht wie beim Stand der Technik in Radialrichtung bewegbar. Weil das zu prüfende Rohr mit seinem Ende ggf. mit einer Schutzkappe oder Muffe in die Prüfpresse eingeführt werden muß, ist der Innendurchmesser des Stützringes entsprechend groß. Trotzdem hat sich gezeigt, daß sich das Kriechen der elastischen Dichtung in den Spalt zwischen Stützring und elastischer Dichtung in vertretbaren Grenzen hält bzw. daß sich eine ausreichend hohe Standzeit der Dichtung trotz des Hineinkriechens in den Spalt ergibt.

Günstigerweise wird vorgeschlagen, daß der Stützring an seiner dem Dichtring zugewandten Seite abgerundete Kanten aufweist, eine Maßnahme, durch die der Verschleiß der elastischen Dichtung an dieser Stelle weiter vermindert wird.

Ein Ausführungsbeispiel der Erfindung ist in den Zeichnungen dargestellt und wird nachfolgend beschrieben :

Figur 1 zeigt einen Querschnitt durch das erfindungsgemäße Werkzeug in Ringkolbenausführung,

Figur 1a einen vergrößerten Ausschnitt gemäß « X » in Fig. 1,

Figur 2 einen Querschnitt durch das Werkzeug nach Fig. 1 entlang der Schnittlinie a-a und

Figur 3 das erfindungsgemäße Werkzeug mit Dichtmanschette.

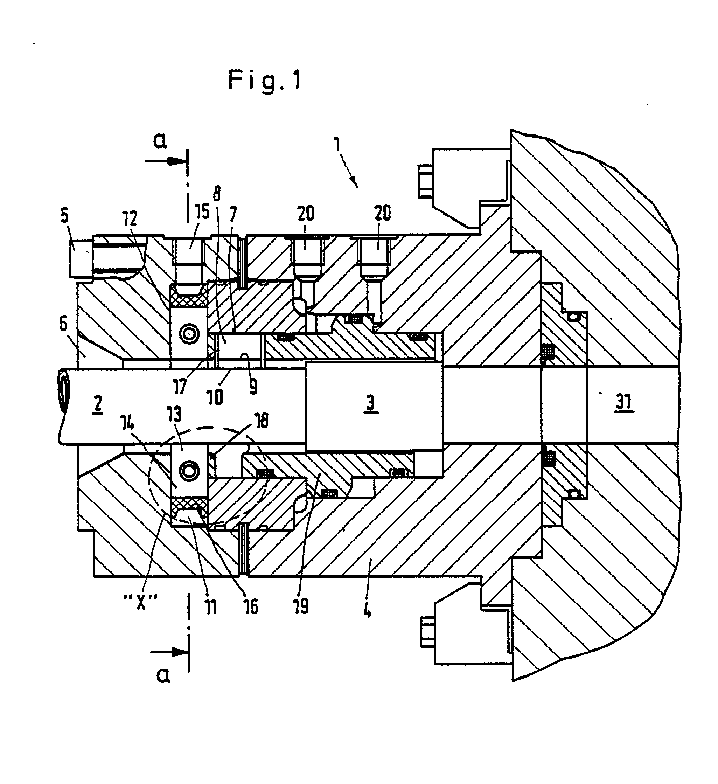

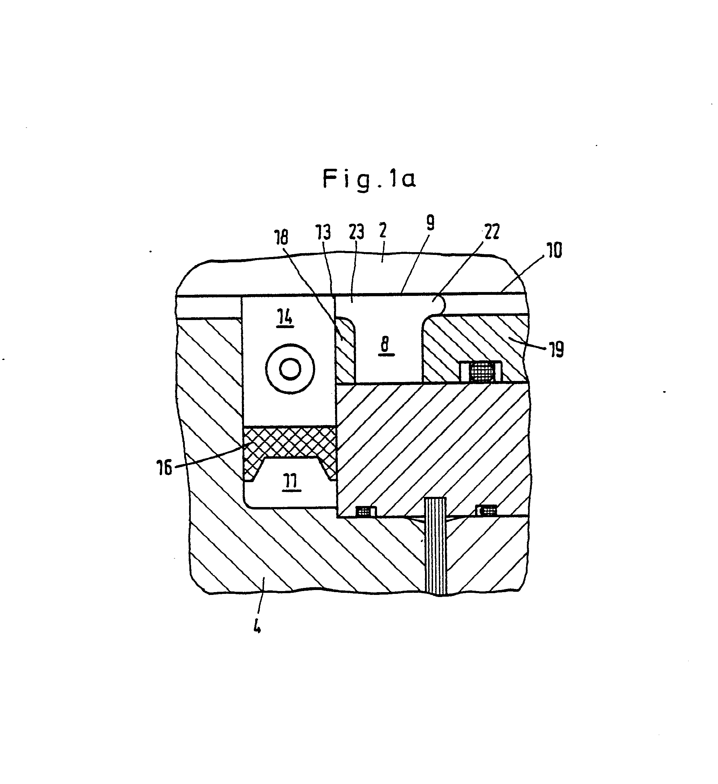

In Fig. 1 ist mit 1 das erfindungsgemäße Prüfwerkzeug für ein bei 2 angedeutetes, mit einem verdickten Ende 3 versehenes Rohr bezeichnet. Das Werkzeug besteht im wesentlichen aus dem aus konstruktiven Gründen zweiteilig ausgebildeten Gehäuse 4, dessen Teile, wie bei 5 angedeutet, miteinander verschraubt sind. Das Gehäuse 4 weist eine zentrale Bohrung 6 auf, in die das Rohr 2 eingeschoben wird. Koaxial zur Längsachse des zu prüfenden Rohres 2 ist in dem Gehäuse 4 eine Ausnehmung 7 vorgesehen, in der ein elastischer Dichtring 8, das Rohr 2 umgreifend angeordnet ist. Dieser Dichtring 8 ist derartig verformbar, daß seine dem Rohr 2 zugewandte Innenseite 9 sich gegen den Außenumfang 10 des Rohres 2 dichtend anlegen kann. Dieser Zustand ist in der unteren Hälfte der Fig. 1 dargestellt, während in der oberen Hälfte das geöffnete Werkzeug gezeichnet ist.

Auf der dem verdickten Rohrende 3 abgewandten Seite des Dichtringes 8 ist im Gehäuse eine ebenfalls koaxial zum Rohr 2 umlaufende Nut 11 vorgesehen, in die ein durchmesserveränderbarer Axialstützring 12 eingelegt ist, dessen aus der Nut 11 herausragender, der elastischen Dichtung 8 zugewandter stirnseitiger Teil 13, den elastischen Dichtring gegen Axialkräfte abstützt, wie ebenfalls in der unteren Hälfte der Fig. 1 dargestellt und anhand der Fig. 1a noch näher beschrieben wird.

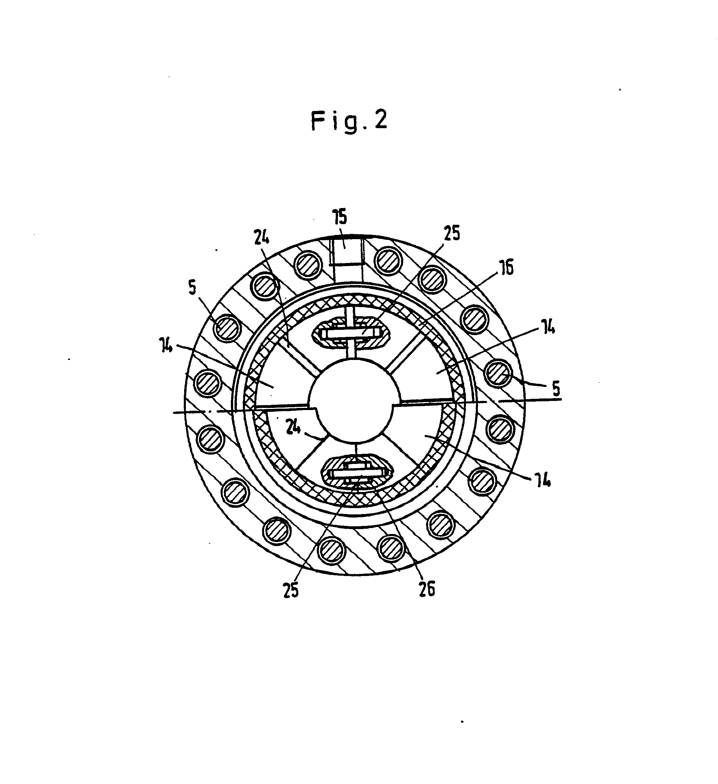

Der Axialstützring 12 besteht aus radial geteilten und voneinander beabstandeten Stützsegmenten 14, die anhand von Fig. 2 noch näher beschrieben werden. Diese Stützsegmente 14 sind durch eine in der Nut 11 dichtend geführte, über den Druckmitteleinlaß 15 hydraulisch beaufschlagbare Manschette 16 radial gegen das Rohr zusammenführbar und, wie ebenfalls anhand von Fig. 2 noch beschrieben wird, mechanisch spreizbar.

Des weiteren ist zwischen dem aus der Nut 11 herausragenden Teil des Axialstützringes und der diesen zugewandten Stirnseite 17 des elastischen Dichtringes 8 ein flacher Stützring 18 vorgesehen, dessen Innendurchmesser mindestens dem größten Außendurchmesser des Rohres 2 bzw. seines verdickten Endes 3 entspricht. Das verdickte Ende 3 des Rohres kann beispielsweise ein Gewindeende bzw. eine aufgeschraubte Muffe sein.

Zur Verformung des elastischen Dichtringes 8 ist der Ringkolben 19 vorgesehen, der in Fig. 1 in der oberen Hälfte in seiner Ruhestellung und in der unteren Hälfte in seiner Arbeitsstellung gezeichnet ist. Der Kolbenraum des Ringkolben wird über die Druckmittelzufuhren 20 unmittelbar mit Prüfdruck beaufschlagt. Dadurch bewegt sich der Ringkolben 19 in die in der unteren Zeichnungshälfte der Fig. 1 dargestellte Lage, wobei er einen Druck auf den elastischen Dichtring 8 ausübt, so daß sich dieser wie in Fig. 1a vergrößert dargestellt, verformt. Gleiche Teile sind hier gleich bezeichnet. Wie in Fig. 1a zu erkennen ist, preßt sich die Innenseite 9 des elastischen Dichtringes 8 gegen den Außenumfang 10 des Rohres 2 an, wobei der Dichtring 8 sich, wie bei 23 und 22 angedeutet, versucht in den Spalt zwischen Kolben 19 und Rohraußenseite 10 bzw. zwischen Rohraußenseite 10 und den zwischen dieser und dem Stützring verbleibenden Raum hineinzuverformen. Die Hauptdruckkräfte aus dem Prüfdruck wirken in einer Richtung, die in Fig. 1 bzw. 1a von rechts nach links anzugeben ist. Den derart wirkenden Axialkräften wirkt der Axialstützring 12 mit seinen Stützsegmenten 14 entgegen, deren stirnseitige Teile die Verformung des elastischen Dichtringes 8 bei 23 begrenzen. Um den Verschleiß zwischen elastischem Dichtring 8 und Stützring 18, der die Abstände zwischen den einzelnen Segmenten überbrückt, die in Fig. 2 mit 24 angegeben sind zu reduzieren, ist der Stützring mit abgerundeten Kanten versehen, wie dies an der entsprechenden Kante des Ringkolbens ebenfalls vorgesehen ist.

In Fig. 2, die einen Querschnitt durch Fig. 1 entlang der Schnittlinien a-a darstellt ist erkennbar, daß eine Vielzahl von Verschraubungen 5 das Gehäuse 4 zusammenhält. Auch in dieser Zeichnung ist in der oberen Hälfte das geöffnete und in der unteren Hälfte das geschlossene Werkzeug dargestellt; ansonsten sind gleiche Teile wie in Fig. 1 beziffert. Darüberhinaus ist aus dieser Darstellung die Ausbildung der Segmente 14 zu erkennen, die in tangentialer Richtung jeweils durch in gegenüber liegenden Bohrungen zweier benachbarter Segmente gleitend geführte Bolzen 25 verbunden sind. Diese Bolzen 25 zentrieren zwischen allen Segmenten vorgesehene Druckfedern 26, die dem mechanischen Spreizen der Segmente 14 dienen.

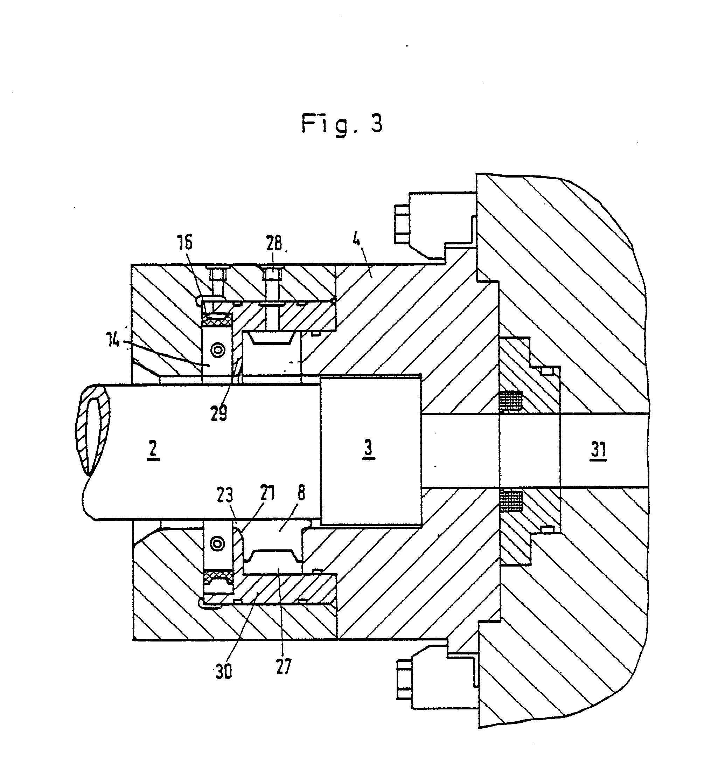

In Fig. 3 ist eine andere vereinfachte Ausführung der Erfindung dargestellt. Zunächst sind auch hier im Gehäuse 4 in gleicher Weise die elastische Dichtung 8 und der aus Stützsegmenten 14 und diese umgreifender Manschette 16 gebildete Axialstützring 12 vorhanden. Die Ausführung nach Fig. 3 unterscheidet sich von der nach Fig. 1 dadurch, daß hier kein Ringkolben zur Verformung der elastischen Dichtung 8 vorgesehen ist, sondern diese als Manschette ausgebildet ist, die in der Ringnut 27 des Gehäuses dichtend geführt über den Einlaß 28 mit Druckmittel beaufschlagbar ist, wodurch sich der elastische Dichtring 8 in der in der unteren Zeichnungshälfte dargestellten Weise verformt. Auch hier wird die Verformungsbewegung des elastischen Dichtringes 8 durch die Stützsegmente 14, wie bei 23 dargestellt, begrenzt, so daß eine sichere axiale Abstützung gegenüber den hohen Axialkräften gegeben ist. Zur Vereinfachung der Konstruktion ist bei dieser Ausbildung ferner vorgesehen, den Stützring 18 durch einen radialen Vorsprung 29 zu ersetzen, der an die Innenseite des Gehäuses 4 bzw. eines Teiles 30 dieses Gehäuses angeformt ist. Auch dieser Vorsprung hat abgerundete bzw. abgeschrägte Kanten, die mit 21 beziffert sind.

Zur Prüfung des Rohres 2 mit Prüfdruck wird — nach Einführen des Rohres — zunächst die Manschette 16 in beiden Konstruktionsvarianten mit Druckmittel beaufschlagt, wodurch der Axialstützring 12 zusammengedrückt wird und die Segmente 14 sich aneinander bzw. an das Rohr anlegen. Sodann wird — gemäß Fig. 1 — der Ringkolben mit Druckmittel beaufschlagt, der den elastischen Dichtring 8 in der in Fig. 1 unten gezeichneten Weise verformt und dichtend gegen das Rohr 2 anlegt. In dem Ausführungsbeispiel nach Fig. 3 wird der Axialdichtring 8 durch Druckmittel bei 28 beaufschlagt und ebenfalls derart verformt, daß er sich gegen das Rohr 2 dichtend anlegt. Sodann oder gleichzeitig kann Druckmittel bei 31 eingelassen werden, um die Druckmittelprüfung des Rohres vorzunehmen.

**Patentansprüche**

1. Werkzeug zum Prüfen von Rohren in einer Rohrprüfpresse mittels Flüssigkeitsdruck, bestehend aus einem Gehäuse, in das von einer Seite das Ende des zu prüfenden Rohres eingeführt wird und das von der anderen Seite mit in das Innere des Rohres geleitetem Druckmittel beaufschlagt wird, und das folgende Merkmale aufweißt :

a) koaxial zur Achse des zu prüfenden Rohres (2) ist in dem Gehäuse (4) eine Ausnehmung (7) vorgesehen, in der ein elastischer Dichtring (8) das Rohr (2) umgreifend angeordnet ist, der derartig verformbar ist, daß seine dem Rohr zugewandte Innenseite (9) gegen dessen Außenumfang (10) dichtend anlegbar ist,

b) auf der dem Ende (3) des eingeführten Rohres (2) abgewandten Seite des Dichtringes (8) ist im Gehäuse (4) eine koaxial zum Rohr (2) umlaufende Nut (11) vorgesehen, in die ein durchmesserveränderbarer Axialstützring (12) eingelegt ist, dessen aus der Nut (11) herausragender, der elastischen Dichtung (8) zugewandter stirnseitiger Teil (12) letztere gegen Axialkräfte abstützt,

c) der Axialstützring (12) besteht aus radial geteilten, voneinander beabstandeten und durch Radialbewegung gegeneinander bewegbaren Stützsegmenten (14), die mittels einer die Segmente umfassenden, in der Nut dichtend geführten hydraulisch beaufschlagbaren Manschette (16) zusammenführbar und mechanisch (26) spreizbar sind.

d) zwischen dem aus der Nut (11) herausragenden Teil des Axialstützringes (12) und der diesem zugewandten Stirnseite der elastischen Dichtung (8) ist ein flacher Stützring (18) mit mindestens dem größten Rohrdurchmesser entsprechendem Innendurchmesser vorgesehen.

2. Werkzeug zum Prüfen von Rohren nach Anspruch 1, dadurch gekennzeichnet, daß zur Verformung des elastischen Dichtringes (8) ein stirnseitig axial auf den Dichtring (8) wirkender Ringkolben (19) vorgesehen ist, der vorzugsweise unmittelbar vom Prüfdruck beaufschlagbar ist.

3. Werkzeug zum Prüfen von Rohren nach Anspruch 1, dadurch gekennzeichnet, daß der elastische Dichtungsring (8) als in einer Ringnut (27) des Gehäuses (4) dichtend geführte Manschette ausgebildet ist, die durch in die Nut (27) geleitetes Druckmittel (28) radial verformbar ist.

4. Werkzeug zum Prüfen von Rohren nach Anspruch 1, dadurch gekennzeichnet, daß der Stützring als radialer Vorsprung (29) an die Innenseite des Gehäuses (4 bis 30) angeformt ist.

5. Werkzeug zum Prüfen von Rohren nach Anspruch 4, dadurch gekennzeichnet, daß der Stützring (12) an seiner dem Dichtring (8) zugewandten Seite abgerundete Kanten (21) aufweist.

**Claims**

1. Tool for the testing of pipes in a pipe testing press by means of hydraulic pressure, consisting of a housing, into which the end of the pipe which is to be tested is introduced from one side and which is acted upon from the other side by pressure medium which is directed into the interior of the pipe, and which has the following features :

a) coaxially to the axis of the pipe (2) which is to be tested, a recess (7) is provided in the housing (4), in which recess an elastic sealing ring (8) is arranged embracing the pipe (2), which ring is deformable such that its inner side (9) facing the pipe is able to be applied tightly against the outer circumference (10) thereof,

b) on the side of the sealing ring (8) facing away from the end (3) of the introduced pipe (2) a groove (11) running coaxially to the pipe (2) is provided in the housing (4), into which groove an axial support ring (12) is placed, which is changeable in diameter, the face part (12) of which, which projects out of the groove (11) and faces the elastic seal (8), supports the latter against axial forces,

c) the axial support ring (12) consists of radially divided support segments (14), which are spaced apart from each other and are movable with respect to each other through radial movement, and which are able to be driven together by means of a sleeve (16), embracing the segments, which is able to be acted upon hydraulically and is carried tightly in the groove, and which segments are able to be spread apart mechanically (26),

d) between the part of the axial support ring (12) which projects out of the groove (11) and the front face of the elastic seal (8) which faces it a flat support ring (18) is provided, which has an internal diameter corresponding at least to the largest pipe diameter.

2. Tool for the testing of pipes according to Claim 1, characterized in that for the deformation of the elastic sealing ring (8) a ring piston (19) is provided which acts on the front face axially onto the sealing ring (8), and which is preferably able to be acted upon directly by the testing pressure.

3. Tool for the testing of pipes according to Claim 1, characterized in that the elastic sealing ring (8) is constructed as a sleeve which is carried tightly in an annular groove (27) of the housing (4), and which is radially deformable through pressure medium (28) which is directed into the groove (27).

4. Tool for the testing of pipes according to Claim 1, characterized in that the support ring is formed onto the inner side of the housing (4 to 30) as a radial projection (29).

5. Tool for the testing of pipes according to Claim 4, characterized in that the support ring (12) has rounded edges (21) on its side facing the sealing ring (8).

## Revendications

· 1. Outil pour tester des tubes dans une presse à tester des tubes au moyen d'une pression de liquide, constitué d'un carter, dans lequel, d'un côté, l'extrémité du tube à tester est introduite et qui, de l'autre côté, est alimenté par un moyen de pression conduit à l'intérieur du tube, et qui comporte les caractéristiques suivantes :

a) coaxialement à l'axe du tube (2) à tester, est prévu, dans le carter (4), un évidement (7) dans lequel un anneau d'étanchéité élastique (8) est disposé de façon à entourer le tube (2), lequel est déformable de façon telle que son côté interne (9) proche du tube peut être appuyé de façon étanche contre la périphérie externe (10) de celui-ci,

b) du côté de l'anneau d'étanchéité (8) éloigné de l'extrémité (3) du tube introduit (2), est prévue, dans le carter (4), une rainure (11) s'étendant coaxialement au tube (2), dans laquelle un anneau d'appui axial (12) de diamètre variable est inséré, dont la partie frontale (13) proche du joint élastique (8) et faisant saillie de la rainure (11) supporte ce dernier contre des forces axiales,

c) l'anneau d'appui axial (12) est constitué de segments d'appui (14) radialement divisés, écartés l'un de l'autre et déplaçables l'un contre l'autre par mouvement radial, qui peuvent être réunis au moyen d'un manchon (16) entourant les segments, logé de façon étanche dans la rainure et qui peut être alimenté hydrauliquement, et peuvent être écartés mécaniquement (26),

d) entre la partie de l'anneau d'appui axial (12) faisant saillie de la rainure (11) et le côté frontal proche de celui-ci du joint élastique (8), est prévu un anneau d'appui plat (18) dont au moins le diamètre interne correspond au plus grand diamètre du tube.

2. Outil pour tester des tubes selon la revendication 1, caractérisé en ce que, pour déformer l'anneau d'étanchéité élastique (8), on prévoit un piston annulaire (19) agissant frontalement axialement sur l'anneau d'étanchéité (8), lequel peut être alimenté de préférence directement par de la pression de test.

3. Outil pour tester des tubes selon la revendication 1, caractérisé en ce que l'anneau d'étanchéité élastique (8) est réalisé sous forme d'un manchon logé de façon étanche dans une rainure annulaire (27) du carter (4), lequel peut être déformé radialement par l'intermédiaire du moyen de pression (28) conduit dans la rainure (27).

4. Outil pour tester des tubes selon la revendication 1, caractérisé en ce que l'anneau de support est formé par une saillie radiale (29) sur le côté interne du carter (4, 30).

5. Outil pour tester des tubes selon la revendication 4, caractérisé en ce que l'anneau de support (12) comporte des bords arrondis (21) sur son côté proche de l'anneau d'étanchéité (8).

Fig.1

0 124 471

# Fig.1a

# Fig.2

Fig. 3